# EUROPEAN PATENT SPECIFICATION

(11) **EP 0 409 803 B1**
(45) Date of publication and mention of the grant of the patent: **02.03.1994**
(21) Application number: 90830314.2
(22) Date of filing: 10.07.1990
(51) Int. Cl.: F16H 3/08, F16H 63/30, F16D 25/063

(54) **A gearbox with meshed gears**
Getriebe mit ineinander eingreifenden Rädern
Boîte à vitesses avec pignons à engrènement continu

(30) Priority: 18.07.1989 IT 6760689
(43) Date of publication of application: 23.01.1991
(73) Proprietor: FIAT AUTO S.p.A., 10135 Torino (IT)
(72) Inventor: Prato, Luigi, I-10090 Villarbasse (Torino) (IT); Titolo, Andrea, I-10126 Torino (IT)
(74) Representative: Marchitelli, Mauro

(56) References cited:
- EP-A- 0 318 977
- WO-A-88/09450
- DE-A- 3 319 042
- DE-C- 161 653
- GB-A- 624 183
- US-A- 2 543 252

## Description

The present invention relates to a gearbox with permanently meshed gears according to the preamble of Claim 1, which is known from DE-C-161 653.

In gearboxes of the aforesaid type, the main shaft is normally in one piece with a set of fixed gears or gear wheels equal in number to the number of ratios required; the countershaft or driven shaft in turn carries the same number of gears as there are fixed gears. The gears fitted on the countershaft are normally idle; thus, in the case of a gearbox with five ratios, for example, there are five pairs of permanently meshed gears; in order to select a gear or gear ratio, one of the idle gears is made fast with the countershaft which is thus driven at the desired angular velocity.

The idle gears are normally made fast by means of clutches or movable friction couplings between the idle gears and the countershaft.

DE-C-161 653 shows a gearbox having a plurality of idle gears, each of which has a conical friction surface which is intended to establish a frictional coupling with a respective conical surface of a coupling element which is fast with the shaft carrying the idle gears.

In solutions with friction couplings, such as the one shown in DE-C-161 653, if the driving torque transmitted by the driving shaft is high, there is a risk of the resisting torque generated by the friction between the gear and the countershaft being less than the driving torque, with the result that the gear will slide on the countershaft with devastating consequences for the friction coupling.

Given that there is a difference between the angular velocities of the idle gears and the countershaft before the engagement of a gear, it is necessary to synchronise their angular velocities; this involves the need for members known as synchronisers which make conventional gearboxes complex and heavy.

In order to avoid the problems cited above, the present invention aims to provide a gearbox which enables safe synchronisation and locking of the idle gear on its shaft and is usable in both manual and automatic forms, regardless of the number of ratios of the gearbox; the gearbox which is the subject of the present invention also has the further advantages that it is light, reliable and suitable for mass production.

According to the invention, these objects are achieved by means of a gearbox of the aforesaid type which has the further characteristics of the second part of Claim 1.

Other advantageous embodiments are defined in the dependent claims.

Further characteristics and advantages of the invention will become clear from the detailed description which follows with reference to the appended drawings, provided by way of non-limiting example, in which:
Figure 1 is a perspective view of the gearbox according to the invention;
Figure 2 is a perspective view of the gearbox according to the invention, sectioned in the planes II-II of Figure 1;
Figure 3 is a countershaft-gear detail, taken on the arrow III of Figure 2;
Figure 4 is an exploded view of the components of the locking system according to the invention;

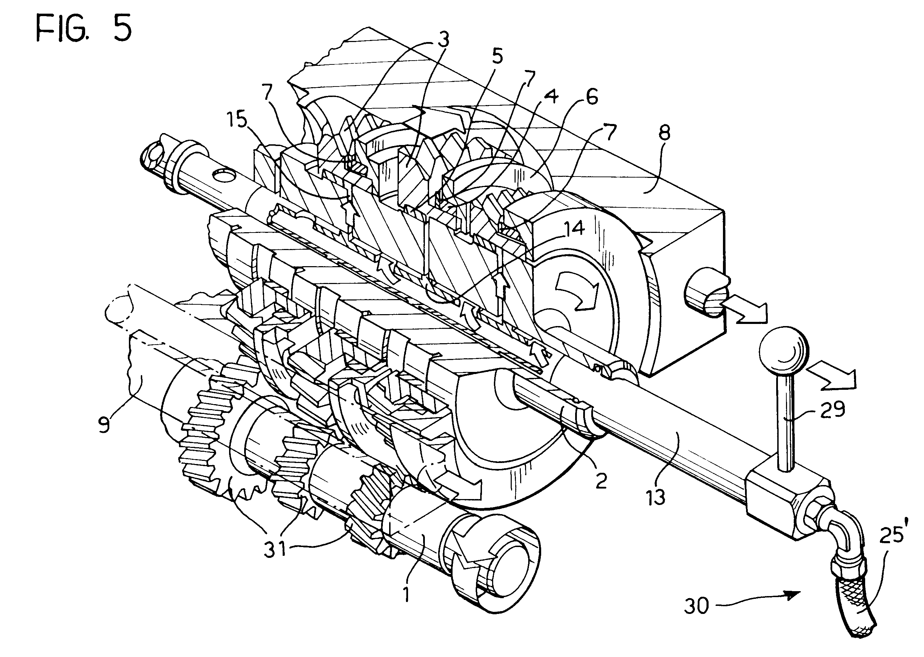

Figure 5 shows the gearbox of Figure 2 with a gear in the engaged condition.

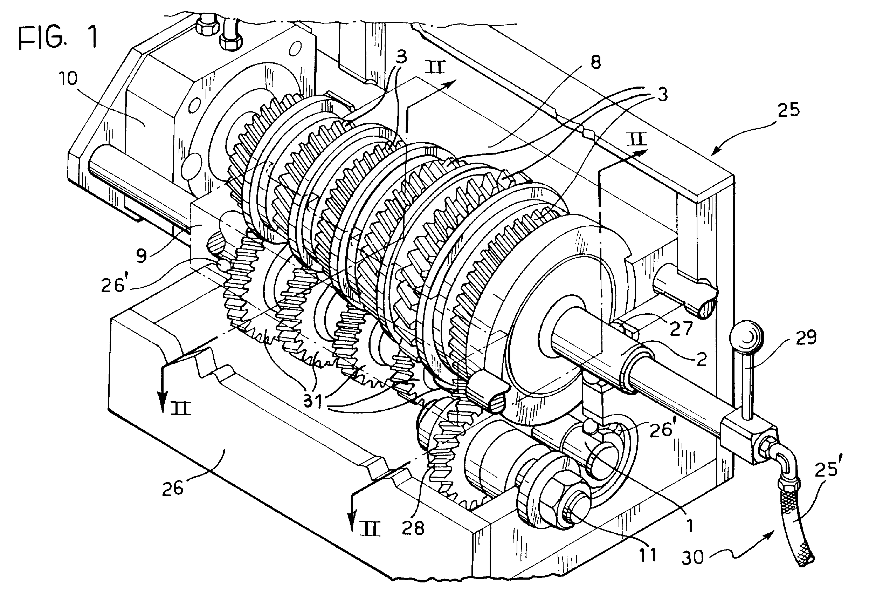

With reference to Figure 1, the gearbox 25 includes a housing 26 which supports a main or driving shaft 1 by means of bearings 26', a (hollow) countershaft or transmission shaft 2 by means of bearings 27, and an idle shaft 11 carrying the reverse gear 28.

The ratios are selected by means of a control lever 29 which, as will be better explained below, operates a pressurised-oil circuit 30. On the opposite side of the gearbox from the control lever 29 is a hydraulic cylinder 10 whose function will be better explained below.

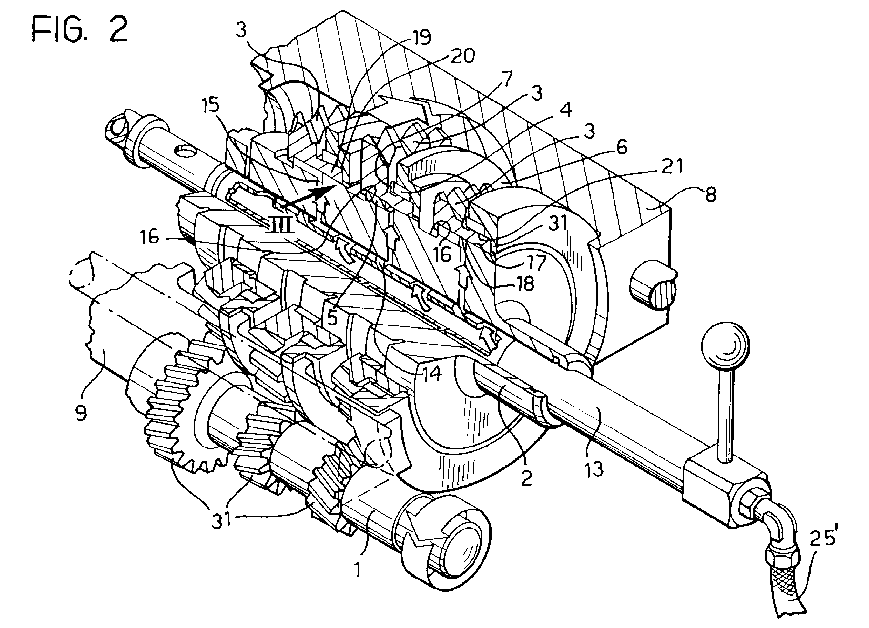

With reference to Figures 2, 3 and 4, the main shaft 1 carries a number of helical gears 31 fixed firmly thereto equal in number to the total number of ratios required, in this case five plus reverse.

A number of helical idle gears 3 equal to number of gears carried by the main shaft 1 are keyed to the countershaft 2.

For each idle gear 3 of the countershaft 2, the use of a "release" or disengagement bush d, a centring bush 5, a clamping and "release" or disengagement ring 6, an annular spring 7, and two axial pullers 8 and 9 operated by means of the hydraulic cylinder 10 is also envisaged.

A hollow cylinder 13 operates within the countershaft 2 and has a series of obturators 14 which act as gear selectors by shutting off or leaving open appropriate oil ducts 15. The hollow cylinder 13 is operated by the control lever 29. As already stated, the gears 31 of the main shaft 1 and the gears 3 of the countershaft 2 have helical teeth.

In correspondence with each idle gear 3, the countershaft 2 includes a cylindrical surface 16 and a conical surface 17 on which the centring bush 5 and an internal conical surface 18 of the idle gear 3 act.

The conicity of the surfaces 17 and 18 depends on the design conditions and may be selected between a maximum value of 3°30′ and a minimum value of substantially 0°.

The conical part of the idle gear 3 is situated on a ring 19 which forms part of the idle gear 3 itself; the ring 19 has a second external conical surface 20 which interacts with the "release" bush 4 and this in turn has an internal conical surface 21 with the same concity as the external conical surface 20. The conicity of the internal conical surface 21 of the release bush 4 and the external conical surface 20 of the ring 19 may be greater than the conicity of the conical surfaces 17 and 18. The ring 19 has two or more axial slots 22 in order to make it more resilient radially.

The bush 4 has a slot 23 to enable it to be mounted outside the ring 19.

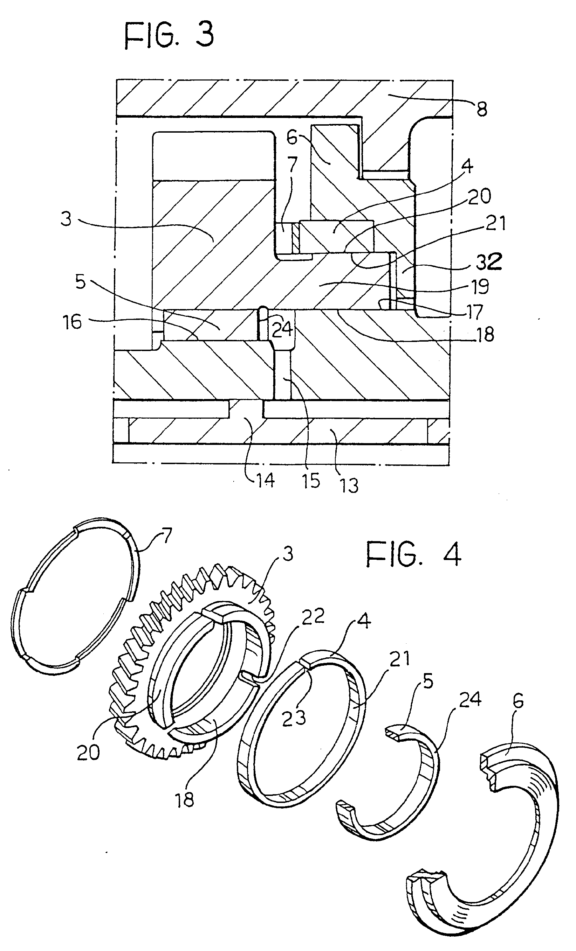

When the gearbox 25 is in operation, the idle gears 3 are driven by the main shaft 1 and initially rotate idly on the countershaft 2, centred by the bush 5. In these conditions, each idle gear 3 receives sufficient torque from the main shaft 1 to overcome friction and to accelerate it when the angular velocity of the driving shaft 1 increases. Since the gears 31 and 3 are helical, the drive torque transmitted by each gear 31 to the corresponding idle gear 3 produces an axial force (of low value) which tends to displace the idle gear 3 relative to the countershaft 2 (towards the right in Figure 3) until the friction surfaces 17 and 18 are pushed together, that is, locked.

In these conditions, in order to prevent locking, the bush 5 balances the axial thrust generated by the coupling of the helical teeth, preventing the relative movement of the idle gear 3 by means of the pressure exerted on the face 24 of the bush 5 by the pressurised oil.

The oil coming from the duct 15 is pressurised by an external pump connected to the main duct 25′ of the pressurised-oil circuit 30.

In order to engage the required gear ratio, that is, the gear, the control lever 29 moves the hollow shaft 13 and hence the obturator 14 which therefore shuts off the duct 15; there is thus no pressure on the face 24 of the bush 5 and the idle gear 3 therefore moves towards the right in Figure 3, bringing the surfaces 18 and 17 into direct contact and thus driving the idle gear 3 onto or locking it to the countershaft 2. At this stage, the oil trapped between the conical contact surfaces 18 and 17 is discharged through grooves, for example helical grooves, provided in the surface 17 and not shown in the drawings.

As the driving torque gradually increases (in the case of a motor-car gearbox, as a result of the release of the clutch and in correspondence with the increase in the driving torque of the engine when the accelerator is depressed) the axial thrust on the idle gear 3 increases proportionally and this increases the pushing or locking together of the conical surfaces 17 and 18; consequently, the frictional resisting torque generated between these surfaces is always greater than the driving torque (this condition is achieved, for example, by the dimensioning of the conical surfaces 17 and 18 and their conicity at the design stage). The idle gear 3 thus behaves as if it were fast with the countershaft 2 which is thus driven at the required angular velocity.

It should be noted that, as the conical surfaces 17 and 18 are brought together, a "synchronising friction" is produced which enables the angular velocities of the idle gear 3 and the countershaft 2 to be equalised quickly. The "synchronisation" of the gears therefore takes place whilst the surfaces 17 and 18 are being brought together.

The dimensioning of the surfaces 17 and 18 is such that once the idle gear 3 is driven onto or locked to the countershaft 2, it cannot be released or disengaged, even in conditions in which the sense of the driving torque is reversed and the coupling of the helical teeth therefore generates an axial force in the opposite direction, for example, during stages when the engine is released.

The changing of a gear or the selection of neutral, that is, the release or disengagement of the idle gears 3 from the countershaft 2, is achieved by the following sequence: the driving torque is cancelled out (the clutch is depressed), the hydraulic cylinder 10 is operated and this moves the pullers 8 and 9 axially, towards the left in Figure 3, they act on the clamping ring 6, which in turn moves, in sequence, first the release or disengagement bush 4 and then the idle gear 3, by means of the annular spring 7 and the abutment 32 of the clamping ring 6. The movement of the bush 4 towards the left in Figure 3 releases the clamping of the ring 19, since the conical surfaces 20 and 21 are no longer in contact. Thus, there is no longer a radial load acting on the ring 19, in the direction of its axis, but a centrifugal radial load caused by the coupling of the conical surfaces 17 and 18. The ring 19 therefore opens resiliently outwardly, by virtue also of the fact that it is formed in sectors defined by the axial recesses or slots 22. The thrust then moves the ring 6 axially towards the left in Figure 3, the idle gear 3 moving the conical contact surfaces 17 and 18 apart and thus releasing them. The idle gear 3 is therefore free to rotate again on the countershaft 2.

Clearly, if another obturator 14 acts on another duct 15, another gear will be selected by the repetition of the sequence described above.

Obviously, the gearbox described above can also be formed with idle gears on the driving shaft 1 instead of on the countershaft 2; in this case, the countershaft carries the fixed gears.

It is also possible to provide a system for the selective obturation of the oil ducts (or other pressurised flow) different from that described, for example, individual solenoid valves arranged on the individual ducts and driven by corresponding gear-selector switches.

Instead of helical gears, gears with straight teeth can be used: in this case, it is necessary to provide for the application of an axial engagement force corresponding to that generated by the helical gears, the force being of a uniform type or being dependent on the driving torque applied by the driving shaft. This axial force can be generated by mechanical or hydraulic resilient systems. The gearbox according to the invention has been described with reference to its application in the automotive field; clearly, however, it is also usable in any sector in which a variation in the relative rates of rotation of a driving shaft and a driven shaft is required.

## Claims

1. A gearbox with permanently meshed gears, including a main shaft (1) and a countershaft (2) each carrying a set of gears (31, 3) equal in number to the number of gear ratios, in which a first set of gears (31) is fixed to one of the shafts (the main shaft (1), or the countershaft (2)) and the other set of gears (3) is free to rotate about the other of the shafts (the countershaft (2) or the main shaft (1)), and in which the gear ratio is selected by the frictional locking of one of the idle gears (3) to the respective shaft (2, 1), wherein the friction surfaces (18, 17) between the idle gear (3) and the respective shaft (2, 1) are conical,
characterised in that each idle gear (3) includes:
- a ring (19) fixed coaxially to the idle gear (3) and having two or more axial slots (22), an internal conical friction surface (18) intended to establish a frictional locking with a respective conical surface (17) of the shaft (2), and a conical external surface (20), and
- a release or disengagement bush (4) coaxial with the idle gear (3) and having an internal conical surface (21) which, in use, is coupled with the external conical surface (20) of the ring (19).

2. A gearbox according to Claim 1, characterised in that each idle gear (3) includes a clamping and releasing ring (6) coaxial with the idle gear (3) and movable axially relative thereto, and in that it also includes axial pullers (8, 9) which are operated by means of a hydraulic cylinder (10) and can release the clamping ring (6) axially from the idle gear (3).

3. A gearbox according to Claim 1, characterised in that coupling of the internal conical surface (18) of the ring (19) with the respective friction surface (17) of the shaft (2) is caused by a relative axial displacement between the idle gear (3) and its shaft (2) and, under all operating conditions, can generate a frictional resisting torque greater than the driving torque transmitted.

4. A gearbox according to Claim 3, characterised in that the conicity of the conical surfaces (17, 18) is less than 3°30'.

5. A gearbox according to Claim 4, characterised in that the shaft carrying the idle gears (3) is the countershaft (2), and in that the gears (31, 3) are helical and are arranged so that the thrust of the gears (31, 3) causes the relative axial displacement.

6. A gearbox according to Claim 5, characterised in that, during the stage when the idle gear (3) is not engaged, the axial thrust is balanced by the pressure exerted on a wall of the idle gear (3) or a wall (24) of a centring bush (5) coaxial with the idle gear (3) by a pressurised fluid (for example, oil).

7. A gearbox according to Claim 6, characterised in that the countershaft (2) is hollow and a hollow cylinder (13) having a series of obturators (14) which, according to the position of the hollow shaft (13), shut off appropriate pressurised-fluid ducts (15) in order to select the required gear ratio, in use, is inserted therein.

8. A gearbox according to any one of Claims 1 to 7, characterised in that the gear ratios are selected manually.

9. A gearbox according to any one of Claims 1 to 7, characterised in that the gear ratios are selected automatically.

10. A motor vehicle characterised in that it includes a gearbox according to any one of Claims 1 to 9.

## Patentansprüche

1. Getriebe mit permanent kämmenden Zahnrädern, umfassend eine Hauptwelle (1) und eine Gegenwelle (2), die jeweils einen Satz Zahnräder (31, 3) tragen, deren Anzahl gleich der Anzahl von Übersetzungsverhältnissen ist, in welchem ein erster Satz Zahnräder (31) an einer der Wellen (die Hauptwelle (1) oder die Gegenwelle (2)) festgelegt ist und der andere Satz Zahnräder (3) zur Drehung um die andere der Wellen (die Gegenwelle (2) oder die Hauptwelle (1)) frei ist, und in welchem das Übersetzungsverhältnis durch Reibverriegelung eines der freilaufenden Zahnräder (3) mit der entsprechenden Welle (2, 1) ausgewählt ist, wobei die Reibflächen (18, 17) zwischen dem freilaufenden Zahnrad (3) und der entsprechenden Welle (2, 1) konisch sind,
dadurch gekennzeichnet, daß jedes freilaufende Zahnrad (3) umfaßt:
- einen Ring (19), der koaxial an dem freilaufenden Zahnrad (3) befestigt ist und zwei oder mehr axiale Schlitze (22), eine konische Innenreibfläche (18) zum Errichten einer Reibverriegelung mit einer entsprechenden konischen Fläche (17) der Welle (2) und eine konische Außenfläche (20) aufweist, und
- eine Löse- oder Ausrück-Buchse (4), die koaxial zum freilaufenden Zahnrad (3) ist und eine konische Innenfläche (21) aufweist, welche im Gebrauch mit der konischen Außenfläche (20) des Rings (19) gekoppelt ist.

2. Getriebe nach Anspruch 1, dadurch gekennzeichnet, daß jedes freilaufende Zahnrad (3) einen Klemm- und Lösering (6) aufweist, der koaxial zum freilaufenden Zahnrad (3) ist und relativ zu diesem axial beweglich ist, und daß es ferner axiale Zugelemente (8, 9) umfaßt, die mittels eines Hydraulikzylinders (10) betätigt sind und den Klemmring (6) axial von dem freilaufenden Zahnrad (3) lösen können.

3. Getriebe nach Anspruch 1, dadurch gekennzeichnet, daß ein Kuppeln der konischen Innenfläche (18) des Rings (19) mit der entsprechenden Reibfläche (17) der Welle (2) durch eine relative Axialverlagerung zwischen dem freilaufenden Zahnrad (3) und seiner Welle (2) bewirkt ist und in allen Betriebszuständen ein Reibungs-Gegendrehmoment erzeugen kann, das größer ist als das übertragene Antriebsdrehmoment.

4. Getriebe nach Anspruch 3, dadurch gekennzeichnet, daß die Konizität der konischen Flächen (17, 18) kleiner als 3°30' Minuten ist.

5. Getriebe nach Anspruch 4, dadurch gekennzeichnet, daß die die freilaufenden Zahnräder (3) tragende Welle die Gegenwelle (2) ist, und daß die Zahnräder (31, 3) Schrägzahnräder sind und derart angeordnet sind, daß die Last der Zahnräder (31, 3) die relative Axialverlagerung bewirkt.

6. Getriebe nach Anspruch 5, dadurch gekennzeichnet, daß während der Phase, während der das freilaufende Zahnrad (3) nicht eingerückt ist, die Axiallast durch den von einem unter Druck stehenden Fluid (bspw. Öl) auf eine Wandung des freilaufenden Zahnrads (3) oder eine Wandung (24) einer zum freilaufenden Zahnrad (3) koaxialen Zentrierbuchse (5) ausgeübten Druck ausgeglichen ist.

7. Getriebe nach Anspruch 6, dadurch gekennzeichnet, daß die Gegenwelle (2) hohl ist und darin ein Hohlzylinder (13) eingesetzt ist, der eine Reihe Absperrelemente (14) aufweist, welche gemäß der Stellung der Hohlwelle (13) geeignete Druckfluidleitungen (15) absperren, um im Gebrauch das geforderte Übersetzungsverhältnis zu wählen.

8. Getriebe nach einem der Ansprüche 1 bis 7, dadurch gekennzeichnet, daß die Übersetzungsverhältnisse von Hand gewählt werden.

9. Getriebe nach einem der Ansprüche 1 bis 7, dadurch gekennzeichnet, daß die Übersetzungsverhältnisse automatisch gewählt werden.

10. Kraftfahrzeug, dadurch gekennzeichnet, daß es ein Getriebe nach einem der Ansprüche 1 bis 9 umfaßt.

## Revendications

1. Boîte de vitesses à pignons en prise constante, comprenant un arbre primaire (1) et un arbre secondaire (2), dont chacun porte un jeu de pignons (31, 3) en nombre égal au nombre des rapports d'engrenage, dans laquelle le premier jeu de pignons (31) est calé sur l'un des arbres (l'arbre primaire (1) ou l'arbre secondaire (2)) et l'autre jeu de pignons (3) est libre de tourner autour de l'autre des arbres (l'arbre secondaire (2) ou l'arbre primaire (1)), et dans laquelle le rapport d'engrenage est sélectionné par verrouillage par friction de l'un des pignons fous (3) sur son arbre respectif (2, 1), dans lequel les surfaces de friction (18, 17) entre le pignon fou (3) et l'arbre (2, 1) respectif sont coniques,
caractérisée en ce que chaque pignon fou (3) comprend :
- une bague (19) fixée coaxialement au pignon fou (3) et présentant deux ou plus de deux fentes axiales (22), une surface de friction conique intérieure (18) destinée à établir un verrouillage par friction avec une surface conique respective (17) de l'arbre (2) et une surface conique extérieure (20), et
- un manchon (4) de désaccouplement ou de désolidarisation, coaxial au pignon fou (3) et ayant une surface conique intérieure (21) qui, en utilisation, est accouplée à la surface extérieure conique (20) de la bague (19).

2. Boîte de vitesses selon la revendication 1, caractérisée en ce que chaque pignon fou (3) comprend une bague de serrage et de désaccouplement (6) coaxiale au pignon fou (3) et mobile dans la direction axiale par rapport à celle-ci ; et en ce qu'elle comprend aussi des tirettes axiales (8, 9) qui sont actionnées au moyen d'un vérin hydraulique (10) et peuvent désolidariser la bague de serrage (6) axialement du pignon fou (3).

3. Boîte de vitesses selon la revendication 1, caractérisée en ce que l'accouplement entre la surface conique intérieure (18) de la bague (19) et la surface de friction respective (17) de l'arbre secondaire (2) est provoquée par un déplacement relatif entre le pignon fou (3) et son arbre (2) et, dans toutes les conditions de fonctionnement, peut engendrer un couple résistant par friction supérieur au couple moteur transmis.

4. Boîte de vitesses selon la revendication 3, caractérisée en ce que la conicité des surfaces coniques (17, 18) est inférieure à 3°30'.

5. Boîte de vitesses selon la revendication 4, caractérisée en ce que l'arbre portant les pignons fous (3) est l'arbre secondaire (2) et en ce que les pignons (31, 3) sont hélicoïdaux et sont agencés de manière que la poussée des pignons (31, 3) provoque le déplacement axial relatif.

6. Boîte de vitesses selon la revendication 5, caractérisée en ce que, pendant la phase pendant laquelle le pignon fou (3) n'est pas accouplé, la poussée axiale est équilibrée par la pression exercée sur une paroi du pignon fou (3) ou sur une paroi (24) d'une bague de centrage (5) coaxiale au pignon fou (3) par un fluide sous pression (par exemple de l'huile).

7. Boîte de vitesses selon la revendication 6, caractérisée en ce que l'arbre secondaire (2) est creux et que, dans cet arbre, est inséré un cylindre creux (13) possédant une série d'obturateurs (14) qui, selon la position de l'arbre creux (13), ferment des conduits appropriés (15) de fluide sous pression, pour sélectionner le rapport d'engrenage voulu, en utilisation.

8. Boîte de vitesses selon une quelconque des revendications 1 à 7, caractérisée en ce que les rapports d'engrenage sont sélectionnés manuellement.

9. Boîte de vitesses selon une quelconque des revendications 1 à 7, caractérisée en ce que les rapports d'engrenage sont sélectionnés automatiquement.

10. Véhicule automobile caractérisé en ce qu'il comprend une boîte de vitesses selon une quelconque des revendications 1 à 9.
